Europäisches Patentamt

European Patent Office

Office européen des brevets

(11) Numéro de publication: **0 028 223**
**B1**

(12) **FASCICULE DE BREVET EUROPEEN**

(45) Date de publication du fascicule du brevet: **06.02.85**

(51) Int. Cl.⁴: **A 47 J 27/09**

(21) Numéro de dépôt: **80900773.5**

(22) Date de dépôt: **30.04.80**

(86) Numéro de dépôt international:
**PCT/FR80/00068**

(87) Numéro de publication internationale:
**WO 80/02496 27.11.80 Gazette 80/27**

(54) **DISPOSITIF LIMITEUR DE PRESSION A DEUX NIVEAUX DE PRESSION POUR MARMITE DE CUISSON.**

(30) Priorité: **11.05.79 FR 7912028**

(43) Date de publication de la demande:
**13.05.81 Bulletin 81/19**

(45) Mention de la délivrance du brevet:
**06.02.85 Bulletin 85/06**

(84) Etats contractants désignés:
**AT CH DE FR GB LI NL SE**

(56) Documents cités:
**US-A-2 428 483**
**US-A-2 485 380**
**US-A-2 524 996**
**US-A-2 544 186**
**US-A-2 692 613**

(73) Titulaire: **SEB S.A.**
**F-21260 Selongey (FR)**

(72) Inventeur: **SEBILLOTTE, Christian**
**6, rue des Moutons**
**F-21260 Selongey (FR)**

(74) Mandataire: **Bouju, André**
**Cabinet Bouju 38 avenue de la Grande Armée**
**F-75017 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention concerne un dispositif limiteur de pression à deux niveaux de pression pour marmite de cuisson à vapeur sous pression, comprenant un conduit d'échappement de vapeur qui est relié au couvercle de la marmite et se termine à l'extérieur par un siège de soupape entourant l'orifice du conduit, une coiffe lestée montée amoviblement sur le conduit, et deux surfaces d'obturation aménagées dans la coiffe susceptibles de prendre appui l'une ou l'autre sur le siège de soupape obturer le conduit et accessibles de l'extérieur chacune par une ouverture pratiquée dans la coiffe pour accueillir de façon coulissante le conduit.

Un tel dispositif est connu du US—A—2 485 380. Selon ce document, la coiffe est constituée par un disque d'axe horizontal dont les ouvertures appartiennent à trois évidements radiaux répartis angulairement, au fond desquels sont aménagées des surfaces d'obturation d'aires différentes. En choisissant l'évidement dans lequel on engage le conduit d'échappement de vapeur, on choisit la pression maximale de cuisson.

Ce dispositif a l'inconvénient que dans chaque position qui peut être choisie, le centre de gravité de la coiffe est au-dessus de l'appui de la surface d'obturation sur le conduit. Il est donc indispensable que la dimension des évidements soit ajustée à celle du conduit pour assurer que la surface d'obturation en service est bien coaxiale au conduit. Cet ajustement est coûteux et introduit entre le conduit et la coiffe des frottements rendant a priori inefficace tout moyen que l'on pourrait prévoir pour assurer la mise en rotation de la soupape lorsque la coiffe est soulevée du conduit par la pression dans la marmite. S'il y avait du jeu entre la coiffe et le conduit, la soupape aurait tendance à se mettre de travers dès qu'elle tendrait à être soulevée par la pression, ce qui rendrait la pression de soulèvement imprécise et introduirait de toute façon un appui coiffe-conduit empêchant encore la mise en rotation. Or, on sait qu'une telle mise en rotation est très appréciée pour indiquer de façon facilement reconnaissable que la pression de cuisson est atteinte.

Le but de l'invention est ainsi de réaliser un dispositif du genre énoncé en introduction, qui soit peu coûteux et dont la coiffe puisse entrer en rotation lorsque la pression de cuisson est atteinte.

Suivant l'invention, le dispositif est caractérisé en ce que les deux ouvertures précitées donnent accès à un évidement axial commun traversant la coiffe et relié à l'extérieur par deux évents sensiblement tangentiels et sensiblement perpendiculaires à l'axe du conduit, en ce que les surfaces d'obturation sont aménagées aux deux extrémités d'une soupape qui est montée à coulisse dans l'évidement axial, et y est déplaçable entre deux positions par retournement manuel de la coiffe avant son engagement sur le conduit, et en ce que l'évidement axial comporte à chaque extrémité des butées destinées à faire porter le poids de la coiffe sur la soupape de façon que le centre de gravité de la coiffe soit situé en-dessous de l'appui de la soupape sur son siège, dans les deux positions précitées.

Quelle qui soit l'ouverture de la coiffe dans laquelle le conduit est introduit, la soupape se met en butée à l'extrémité supérieure de l'évidement de la coiffe. Ainsi, dans les deux positions possibles de la coiffe, celle-ci a son centre de gravité sous l'appui de la surface d'obturation sur le conduit. Du fait de l'appui stable qui en résulte, la surface d'obturation se positionne d'elle-même coaxialement au conduit, sans qu'il soit nécessaire de positionner avec précision la soupape relativement au conduit. La fabrication de la soupape en est donc rendue très économique. En outre, quand la pression est atteinte, la coiffe, au lieu de tendre à se mettre de travers et à prendre appui sur le conduit, est soulevée bien verticalement et grâce aux évents tangentiels, tourne sur le coussin de vapeur qui se crée entre l'extrémité du conduit et la surface d'obturation.

D'autres particularités et avantages de l'invention apparaîtront encore ans la description ci-après:

Aux dessins annexés, donnés à titre d'exemples non limitatifs:

— les figures 1 et 3 représentent, en coupe axiale, le dispositif limiteur de pression selon un premier mode de réalisation, dans ses deux positions de fonctionnement;

— la figure 2 est une vue en plan de ce même dispositif, ce dernier étant dans la position de la figure 1;

— les figures 4, 5 et 6 représentent, en coupe axiale, trois variantes de la soupage du dispositif et du siège de soupape;

— la figure 7 représente partiellement, en coupe axiale, un autre mode de réalisation de la coiffe et de la soupape du dispositif limiteur de pression;

— la figure 8 est une vue en plan de l'une des butées de soupape du dispositif de la figure 7.

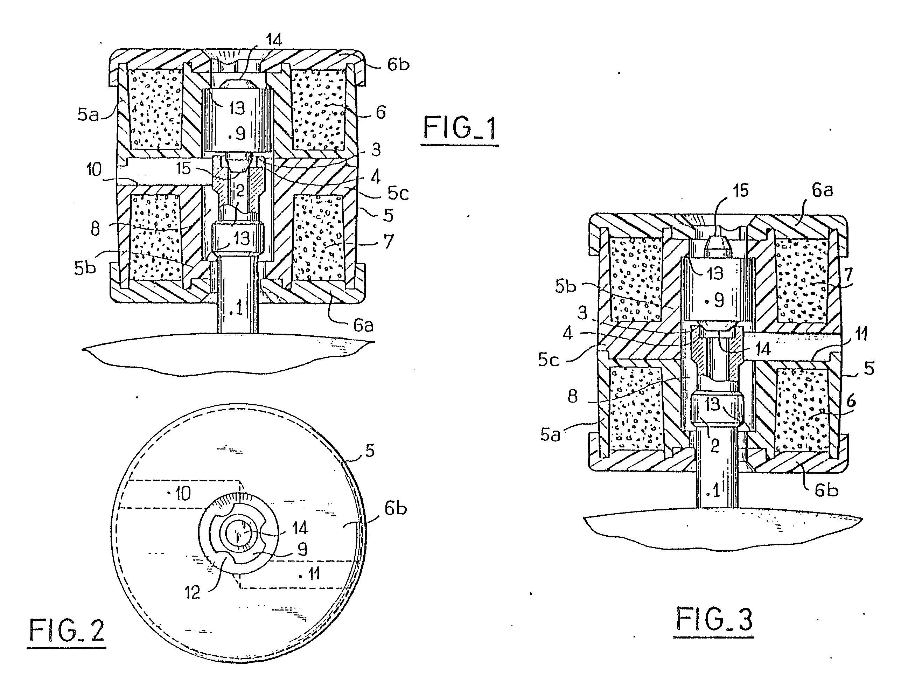

Dans la réalisation des figures 1 à 3 le dispositif limiteur de pression comprend un conduit d'échappement de vapeur 1 traversant le couvercle de la marmite, qui présente un renflement intermédiaire 2 et dont le canal interne présente, à son extrémité supérieure, un dégagement cylindrique formant un siège de soupape constitué de deux gradins circulaires coaxiaux 3 et 4. Une coiffe 5 est montée à coulissement sur le conduit 1. Cette coiffe 5 formée d'une enveloppe de matière plastique, est composée de deux cylindres coaxiaux 5a, 5b, réunis par une cloison médiane 5c, et deux couvercles terminaux 6a, 6b, chacun percé d'une ouverture centrale. Ces composants délimitent deux chambres annulaires 6 et 7, remplies de grenaille de plomb ou d'un autre métal lourd.

La coiffe 5 comprend un évidement axial 8, terminé à ses extrémités par des épaulements internes 13 formant butée, et dans lequel une soupape 9 est logée à coulissement. Cette soupape 9, comprend un corps cylindrique portant à ses extémités des pointeaux tronconiques 14 et 15, de diamètre moyens différents. La soupape 9, qui constitue l'organe déplaçable du dispositif, peut prendre deux positions, et passer de l'une à l'autre par simple retournement. On voit à la figure 1 que dans la première position de la soupape 9, le pointeau 15 présentant le plus petit diamètre moyen, pénètre entièrement dans la gradin externe 3 du siège de soupape et s'appuie sur le gradin interne 4, plus étroit, du siège de soupape, dans ces conditions, la coiffe 5, par son poids, tend à maintenir la soupape sur son siège contre l'action de la pression de vapeur. La force ascendante exercée par la pression de vapeur est proportionnelle à l'aire, vue en projection sur un plan perpendiculaire à la direction cu mouvement de la soupape, c'est-à-dire un plan horizontal dans l'exemple représenté, de la partie du pointeau 15 circonscrite par le siège 4 et qui est exposée à la pression de vapeur. Le diamètre du gradin 4 du siège est choisi tel que la force ascendante exercée la pression de vapeur soulève la soupape au moment où cette pression atteint 1,9 bar. A ce moment, la vapeur soulève la soupape avec la coiffe 5 et s'échappe par deux évents horizontaux 10 et 11, percés dans la cloison médiane de la coiffe 5. Ceux-ci, grâce à leur position décentrée, mettent la coiffe en rotation par réaction de la pression exercée par la vapeur.

La coiffe 5 peut être retirée du conduit d'échappement 1 et placée dans la position inverse représentée à la figure 3. A ce moment, la soupape 9, qui a ainsi été retournée dans son autre position, coulisse d'une extrémité à l'autre de l'évidement axial 8 de la coiffe 5 et vient buter contre l'épaulement 13 qui ferme partiellement l'extrémité opposée de cet évidement 8. Ainsi, le centre de gravité de la coiffe 5 se trouve toujours en dessous du niveau du siège de soupape 3, 4, grâce à quoi la coiffe 5 est toujours en équilibre stable. Dans la position représentée à la figure 3, la soupape 9 s'appuie par son pointeau large 14 sur le gradin extérieur 3, également plus large, du siège de soupape. Dans cette position, l'aire, vue en projection sur un plan horizontal, de la partie du pointeau 14 exposée à la pression de vapeur, est plus grande que dans la position représentée à la figure 1, si bien que la force ascendante équilibrant le poids de la coiffe 5 et de la soupape 9 s'obtient avec une pression de vapeur de 1,5 bar seulement. Dès que la pression dépasse à peine cette valeur, la soupape 9 se soulève et la vapeur s'échappe par les évents 10, 11, comme dans la première position.

Les ouvertures centrales des deux couvercles 6a, 6b de la coiffe 5 sont munies chacune de trois saillies élastiques 12, visibles à la figure 2, qui, en coopération avec le renflement 2 du conduit 1, permettent d'une manière connue en soi de placer manuellement le limiteur de pression dans une position d'échappement de la vapeur.

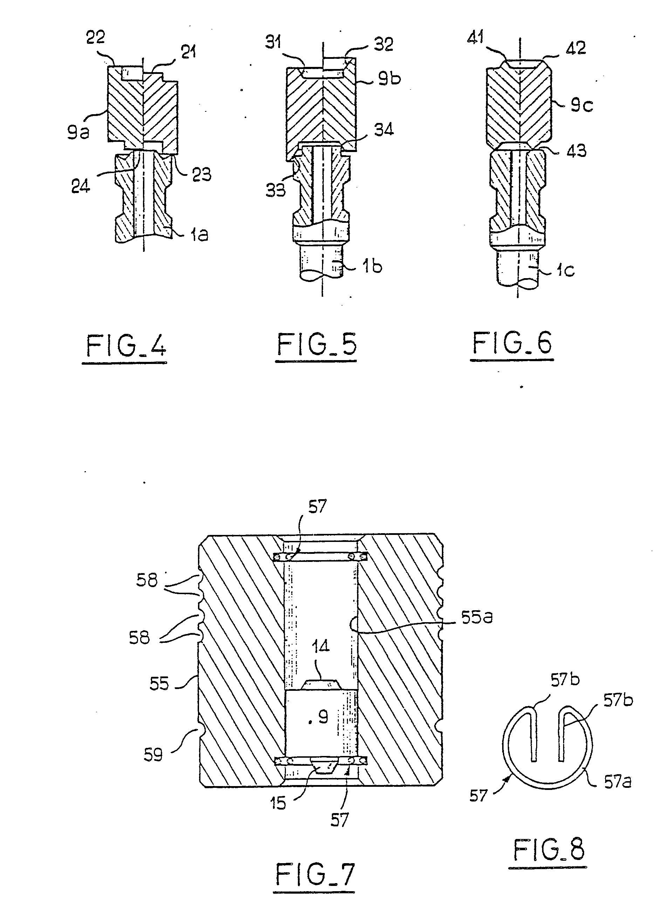

Dans la figure 4, la soupape 9a est représentée en position de haute pression à gauche de l'axe, et en position de basse pression à droite de l'axe. On passe d'une position à l'autre par inversion de la coiffe 5, comme dans les figures 1 et 3. Les deux surfaces d'obturation 21 et 22 de la soupape 9a sont planes et perpendiculaires à l'axe, tandis que le siège de soupape du conduit d'échappement 1a est consitué de deux arêtes 23 et 24, faisant saillie axialement vers la soupape. Dans la position de haute pression, la soupape 9a repose, par sa face circulaire 21, sur l'arête interne 24 du siège. Dans la position de basse pression, la soupape repose, par sa face annulaire 22 sur l'arête extérieure 23 du siège de soupape. On voit que dans la position de basse pression, l'aire de la partie de la soupape exposée à la pression, vue en projection sur un plan perpendiculaire à l'axe, est plus grande que dans la position de haute pression.

La variante de la figure 5 est la réciproque du mode de réalisation des figures 1 à 3, en ce sens que les deux gradins circulaires 33 et 34 du siège sont disposés à l'extérieur du conduuit 1b, et que la soupape 9b est munie à ses extrémités d'évidements tronconiques 31 et 32 de diamètres moyens différents. La soupape 9b est représentée en position de haute pression à droite de l'axe et en position de basse pression à gauche de l'axe. On voit que dans cette dernière position, où la soupape 9b repose sur l'arête du grand gradin 33, l'aire, vue en projection sur un plan perpendiculaire à l'axe, de la partie de la soupape 9b exposée à la pression est plus grande que dans la position de haute pression. Ici encore, le passage de l'une à l'autre des positions se fait par inversion de la coiffe.

A la figure 6, les positions de haute et basse pression de la soupape 9c sont représentées comme aux figures 4 et 5. Les deux surfaces d'obturation de la soupape sont délimitées par des arêtes circulaires 41 et 42 faisant saillie axialement. Selon la position de la soupape 9c, l'une ou l'autre de ces arêtes repose sur un siège plan 43, perpendiculaire à l'axe du conduit 1c. L'aire, vue en projection perpendiculaire à l'axe, de la partie de la soupape exposée à la pression est manifestement plus grande lorsque l'arête 42 repose sur le siège que lorsque c'est l'arête 41 qui y repose.

Dans le mode de réalisation de la figure 7, où le conduit d'échappement de vapeur et le siège de soupape (non représentés) sont semblables à ceux du premier mode de réalisation, la coiffe 55 est d'une seule pièce en métal. Les butées de l'alésage de coulissement 55a de la soupape 9 ne sont plus consituées par des épaulements, mais par des pièces élastiques 57 en fil d'acier à ressort comprenant un tronçon central arqué 57a (voir figure 8), mainenus avec compression dans une gorge annulaire de l'alésage axiale 55a de la coiffe 55, et deux branches terminales 57b rectilignes et parallèles qui transmettent la poussée exercée par la coiffe sur la soupape et qui, étant amovibles, permettent l'introduction de la soupape dans l'alésage.

La coiffe 55 est munie d'un groupe de quatre rainures périphériques 58 près de son extrémité qui est l'extrémité supérieure dans la position de haute pression (représentée) et d'une seule rainure périphérique 59 près de son extrémité qui est l'extrémité supérieure dans la position de basse pression. Ces rainures permettent d'identifier la position de la soupape, et par conséquent, la pression d'ouverture de celle-ci.

**Revendications**

1. Dispositif limiteur de pression à deux niveaux de pression pour marmite de cuisson à vapeur sous pression, comprenant un conduit d'échappement de vapeur (1; 1*a*; 1*b*; 1*c*) qui est relié au couvercle de la marmite et se termine à l'extérieur par un siège de soupape (3, 4; 23, 24; 33, 34; 43) entourant l'orifice du conduit, une coiffe lestée (5, 55) montée amoviblement sur le conduit et deux surfaces d'obturation (14, 15; 21, 22; 31, 32; 41, 42) aménagées dans la coiffe, susceptibles de prendre appui l'une ou l'autre sur la siège de soupape pour obturer le conduit et accessibles de l'extérieur chacune par une ouverture pratiquée dans la coiffe pour accueillir de façon coulissante le conduit caractérisé en ce que les deux ouvertures précitées donnent accès à un évidement axial commun (8, 55*a*) traversant la coiffe (5; 55) et relié à l'extérieur par deux évents (10, 11) sensiblement tangentiels et sensiblement perpendiculaires à l'axe du conduit (1; 1*a*; 1*b*; 1*c*), en ce que les surfaces d'obturation (14, 15; 21, 22; 31, 32; 41, 42) sont aménagées aux deux extrémités d'une soupape (9; 9*a*; 9*b*; 9*c*) qui est montée coulisse dans l'évidement axial commun et y est déplaçable entre deux positions par retournement manuel de la coiffe avant son engagement sur la conduit, et en ce que l'évidement axial comporte à chaque extrémité des butées (13, 57) destinées à faire porter le poids de la coiffe sur la soupape de façon que le centre de gravité de la coiffe soit situé en dessous de l'appui de la soupape sur son siège, dans les deux positions précitées.

2. Dispositif selon la revendication 1, caractérisé en ce que la coiffe (5) est formée d'une enveloppe de matière plastique délimitant au moins une chambre (6, 7) contenant une matière de forte densité.

3. Dispositif la revendication 1, caractérisé en ce que la coiffe (55) est d'une seule lièce en métal comportant un alésage axial (55*a*) et que les butées consistent chacune en un fil métallique élastique amovible (57) dont une partie est engagée dans une gorge circulaire de l'alésage et une autre partie fait saillie à l'intérieur de l'alésage.

4. Dispositif selon l'une quelconque des revendications 1 à 3, caractérisé en ce que la coiffe (5) est munie à chaque extrémité de moyens élastiques de retenue (12) coopérant avec des moyens de retenue (2) prévus sur la conduit (1; 1*a*; 1*b*; 1*c*).

5. Dispositif conforme à l'une des revendications 1 à 4, caractérisé en ce que les surfaces d'obturation (14, 15) sont coniques et diffèrent par leur grand diamètre, et en ce que le siège (3, 4) est réalisé en gradin, le grand diamètre de l'une des surfaces d'obturation (14) étant supérieur, et celui de l'autre surface d'obturation (15) étant inférieur au diamètre du gradin le plus large (3).

**Patentansprüche**

1. Druckbegrenzungsvorrichtung mit zwei Druckniveaus für einen unter Druck arbeitenden Dampfkochtopf, mit einer Dampfaustrittsleitung (1, 1a, 1b, 1c), die mit dem Deckel des Topfes verbunden ist und nach außen mit einem die Öffnung der Leitung umgebenden Ventilsitz (3, 4, 23, 24, 33, 34, 43) endet, einer auf der Leitung abnehmbar montierten, mit einem Ballast versehenen Kappe (5, 55) und zwei in der Kappe ausgebildeten Verschlußflächen (14, 15, 21, 22, 31, 32, 41, 42), von denen die eine oder andere zum Verschließen der Leitung an dem Ventilsitz anlegbar ist und von denen jede durch eine in der Kappe ausgebildete Öffnung zur Aufnahme der Leitung durch Einschieben von außen zugänglich ist, dadurch gekennzeichnet, daß die beiden vorgenannten Öffnungen Zutritt zu einem gemeinsamen axialen Hohlraum (8, 55a) schaffen, der die Kappe (5, 55) durchquert und mit der Atmosphäre durch zwei im wesentlichen tangentiale und zur Achse der Leitung (1, 1a, 1b, 1c) im wesentlichen senkrechte Abzugsöffnungen (10, 11) verbunden ist, daß die Verschlußflächen (14, 15, 21, 22, 31, 32, 41, 42) an den beiden Enden eines Ventils (9, 9a, 9b, 9c) ausgebildet sind, das verschiebbar in dem gemeinsamen axialen Hohlraum montiert und darin, durch manuelles Umdrehen der Kappe vor deren Aufsetzen auf die Leitung zwischen zwei positionen verlagerbar ist, und daß der axiale Hohlraum an jedem Ende Anschläge (13, 57) besitzt, die dazu bestimmt sind, das Gewicht der Kappe derart auf das Ventil wirken zu lassen, daß der Schwerpunkt der Kappe sich in den beiden vorgenannten Positionen unterhalb der Anlagestelle des Ventils auf seinem Sitz befindet.

2. Vorrichtung nach Anspruch 1, dadurch gekennzeichnet, daß die Kappe (5) von einer Hülle aus Kunststoff gebildet ist, die zumindest eine ein Material großer Dichte enthaltende Kammer (6, 7) begrenzt.

3. Vorrichtung nach Anspruch 1, dadurch gekennzeichnet, daß die Kappe (55) aus einem einzigen Stück aus Metall besteht, das eine axiale Bohrung (55a) besitzt, und daß die Anschläge je aus einem abnehmbaren elastischen Metalldraht (57) bestehen, von dem ein Teil in eine kreisförmige Nut der Bohrung eingreift und ein anderer Teil in das Innere der Bohrung vorragt.

4. Vorrichtung nach irgendeinem der Ansprüche 1 bis 3, dadurch gekennzeichnet, daß die Kappe (5) an jedem Ende mit elastischen Haltemitteln (12) versehen ist, die mit auf der Leitung (1, 1a, 1b, 1c) vorgesehenen Haltemitteln (2) zusammenwirken.

5. Vorrichtung nach einem der Ansprüche 1 bis 4, dadurch gekennzeichnet, daß die Verschlußflächen (14, 15) konisch und in ihrem großen Durchmesser unterschiedlich sind, und daß der Sitz (3, 4) abgestuft ausgebildet ist, wobei der große Durchmesser der einen Verschlußfläche (14) größer und jener der anderen Verschlußfläche (15) kleiner als der Durchmesser der größten Stufe (3) ist.

**Claims**

1. A device for limiting the pressure for a steam pressure-cooker to two pressure levels, comprising a steam escape duct (1; 1a; 1b; 1c) connected to the cooker lid and terminating externally in a valve seat (3, 4; 23, 24; 33, 34; 43) surrounding the duct opening, a weighted cap (5, 55) mounted detachably on the duct and two shut-off surfaces (14, 15; 21, 22; 31, 32; 41, 42) arranged in the cap and adapted to bear one or other upon the seat in order to shut off the duct and each accessible from the exterior via an aperture formed in the cap in order slidingly to receive the duct, characterised in that the said two apertures give access to a common axial cavity (8, 55a) extending through the cap (5, 55) and connected to the exterior via two vents (10, 11) which are substantially tangential and substantially perpendicular to the axis of the duct (1; 1a; 1b; 1c), in that the shutoff surfaces (14, 15; 21, 22; 31, 32; 41, 42) are disposed at the two ends of a valve (9; 9a; 9b; 9c) mounted slidably in the common axial cavity and displaceable therein between two positions by manual inversion of the cap before it is fitted on the duct, and in that the axial cavity has at each end stops (13, 57) adapted to apply the weight of the cap to the valve in such a mannner that the centre of gravity of the cap is situated below the contact of the valve and its seat in the said two positions.

2. A device according to claim 1, characterised in that the cap (5) is in the form of a plastic casing defining at least one chamber (6, 7) containing a high-density material.

3. A device according to claim 1, characterised in that the cap (55) is a single piece of metal comprising an axial bore (55a) and in that each of the stops is in the form of a detachable resilient wire (57), one part of which engages in a circular groove in the bore while the other part projects into the interior of the bore.

4. A device according to any one of claims 1 to 3, characterised in that the cap (5) has resilient retaining means (12) at each end, said means cooperating with retaining means (2) provided on the duct (1; 1a; 1b; 1c).

5. A device according to any one of claims 1 to 4, characterised in that the shutoff surfaces (14, 15) are conical and differ in respect of their large diameter and in that the seat (3, 4) is stepped, the large diameter of one of the shut-off surfaces (14) being larger, and that of the over shut-off surface (15) being smaller, than the diameter of the wider step (3).

FIG_1

FIG_2

FIG_3

FIG_4

FIG_5

FIG_6

FIG_7

FIG_8